# EUROPEAN PATENT SPECIFICATION

(11) **EP 4 132 086 B1**
(45) Date of publication and mention of the grant of the patent: **18.11.2026**
(21) Application number: 21796642.3
(22) Date of filing: 27.04.2021
(51) Int. Cl.: H04L 47/56, H04L 47/6275, H04L 47/625, H04L 47/62, H04W 28/16, H04L 47/24, H04L 47/283

(54) **DATA TRANSMISSION METHOD AND RELATED DEVICE**
DATENÜBERTRAGUNGSVERFAHREN UND ZUGEHÖRIGE VORRICHTUNG
PROCÉDÉ DE TRANSMISSION DE DONNÉES ET DISPOSITIF ASSOCIÉ

(30) Priority: 28.04.2020 CN 202010348888
(43) Date of publication of application: 08.02.2023
(73) Proprietor: Huawei Technologies Co., Ltd., Shenzhen, Guangdong 518129 (CN)
(72) Inventor: TANG, Feilong, Shanghai 201209 (CN); WU, Wenfu, Shenzhen, Guangdong 518129 (CN); LI, Hancheng, Shenzhen, Guangdong 518129 (CN); YU, Jinhao, Shanghai 201209 (CN); WU, Guangxiong, Shanghai 201209 (CN); CHEN, Long, Shanghai 201209 (CN); YAO, Cheng, Shanghai 201209 (CN)
(74) Representative: Gill Jennings & Every LLP
(86) International application number: PCT/CN2021/090165
(87) International publication number: WO 2021/218950

(56) References cited:
- CN-A- 103 974 436
- CN-A- 105 873 223
- CN-A- 106 332 251
- CN-A- 109 818 710
- US-A1- 2011 019 563
- US-B2- 7 613 167

## Description

### TECHNICAL FIELD

Embodiments of this application relate to the communications field, and in particular, to a data transmission method, network device, computer storage medium and a computer program product.

### BACKGROUND

A virtual reality (virtual reality, VR) technology is a new practical technology developed in the 20th century. The virtual reality technology includes a computer, electronic information, and a simulation technology. A basic implementation of the virtual reality technology is that the computer simulates a virtual environment, to give a person a sense of environment immersion. With the continuous development of social productivity and science and technology, various industries have an increasing demand for the VR technology. The VR technology has also enormously progressed and gradually becomes a new scientific and technological field.

The running of VR requires a large amount of data transmission, storage, and powerful computing capabilities. With the development of a 5th generation (5th generation, 5G) mobile communication technology, the generation of virtual images can be migrated from a local host to a cloud. This enables a terminal device to be simpler and reduces user costs. In addition, a higher network speed enables a user to reduce a bad experience such as frame freezing during live broadcast and game playing. This is a low delay function, and lays a foundation for large-scale popularization of VR.

When VR traffic bursts (for example, an angle of view of a camera device rotates), in other words, when a large amount of to-be-transmitted data is suddenly received on a link, transmission of instantaneous burst large traffic cannot be completed in time due to insufficient link bandwidth. As a result, a delay increases.
CN 109 818 710 A1 describes a kind of data transmission method is applied to the first electronic equipment characterized by comprising before sending any non-bursty data packet to the second electronic equipment, judge whether deposit in data packet queue to be sent In burst data packet, wherein second electronic equipment is to have data transmission channel with first electric room foundation Receiving device, the burst data packet is the default data packet with priority processing permission, the non-bursty data Packet is other data packets in addition to burst data packet; If so, stopping to send any non-bursty data packet, and there is data biography to first electronic equipment foundation All receiving devices in defeated channel send the burst data packet, after sending the burst data packet, open again Second electronic equipment described in trend sends any non-bursty data packet.
US 7 613 167 B2 describes a method for determining a priority classification of a burst at a physical interface of a communications device, comprising the steps of: detecting an identifier from the burst at the physical interface, wherein said detecting occurs prior to data link layer protocol processing; matching said identifier to a priority indicator to determine the priority classification; postpending said priority indicator to the burst; and forwarding the burst to a priority queue associated with said priority indicator.

### SUMMARY

Embodiments of this application provide a data transmission method, device, computer storage medium and a computer program product to reduce a data transmission delay.

### BRIEF DESCRIPTION OF DRAWINGS

FIG. 1 is a schematic diagram of a network framework according to an embodiment of this application;
FIG. 2 is a schematic flowchart of a data transmission method according to an embodiment of this application;
FIG. 3 is a schematic diagram of burst data according to an embodiment of this application;
FIG. 4 is a schematic diagram of a structure of a network device according to an embodiment of this application; and
FIG. 5 is another schematic diagram of a structure of a network device according to an embodiment of this application.

### DESCRIPTION OF EMBODIMENTS

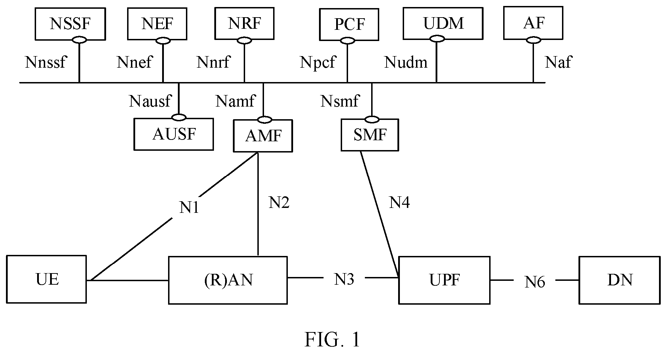

Refer to FIG. 1. Network elements mainly involved in the present invention include user equipment (user equipment, UE), an access and mobility management function (access and mobility management function, AMF) device, a policy control function (policy control function, PCF) device, a session management function (session management function, SMF) device, and a user plane function (user plane function, UPF) device.

The PCF device may be used as a unified policy framework to manage network behavior, and provide a policy rule for a network entity to implement execution. In the present invention, the PCF device is mainly used for static bandwidth reservation and allocation, and reserves redundant pool bandwidth for the UPF device of an entire session for use of burst traffic.

After a network device receives related signaling of burst data, the user equipment calculates a status of bandwidth occupied by a VR service session, executes a redundant pool bandwidth scheduling algorithm, returns bandwidth allocation signaling, adjusts bandwidth, and invokes a scheduling method on a forwarding node, to ensure that the burst data can be preferentially transmitted on an intermediate node and avoid congestion.

In embodiments of this application, "/" may represent an "or" relationship between associated objects. For example, A/B may represent A or B. "and/or" may be used to indicate that there are three relationships between the associated objects. For example, A and/or B may represent the following three cases: Only A exists, both A and B exist, and only B exists. A and B may be in a singular form or a plural form. In embodiments of this application, terms such as "first" or "second" may be used to distinguish between technical features with a same or similar function. The terms such as "first" or "second" do not limit a quantity and an execution sequence, and the terms such as "first" or "second" do not indicate a definite difference. In embodiments of this application, terms such as "example" or "for example" are used to represent giving an example, an illustration, or a description. Any embodiment or design scheme described as "example" or "for example" should not be explained as being more preferred or advantageous over another embodiment or design scheme. Use of the terms such as "example" or "for example" is intended to present a related concept in a specific manner for ease of understanding.

The network device in embodiments of this application includes a base station (base station, BS) or a gateway device, and may be a device deployed in a radio access network for wireless communication with a terminal device. The base station may be in a plurality of forms, for example, a macro base station, a micro base station, a relay station, and an access point. The gateway device may be a server configured to send data, such as the UPF device or a routing device. The base station in embodiments of this application may be a base station in a 5G system or a base station in an LTE system. The base station in the 5G system may also be referred to as a transmission reception point (transmission reception point, TRP) or a next generation NodeB (generation NodeB, gNB or gNodeB). In embodiments of this application, an apparatus configured to implement a function of the network device may be the network device, or may be an apparatus, for example, a chip system, that can support the network device to implement the function. The apparatus may be deployed on the network device, or may be used together with the network device. In technical solutions provided in embodiments of this application, the technical solutions provided in embodiments of this application are described by using an example in which the apparatus configured to implement the function of the network device is the network device.

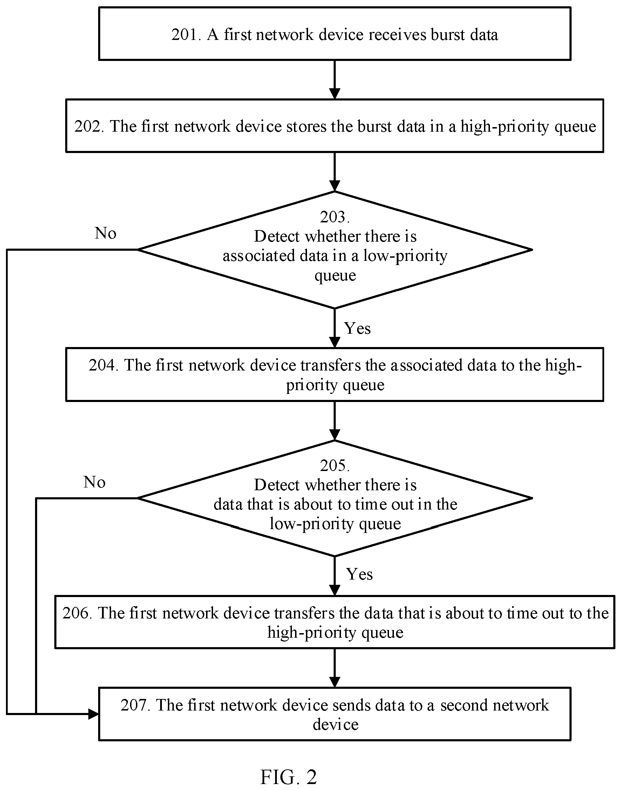

With reference to a diagram of a network architecture in FIG. 1, refer to FIG. 2. A data transmission method in an embodiment of this application includes the following steps.

201. A first network device receives burst data.

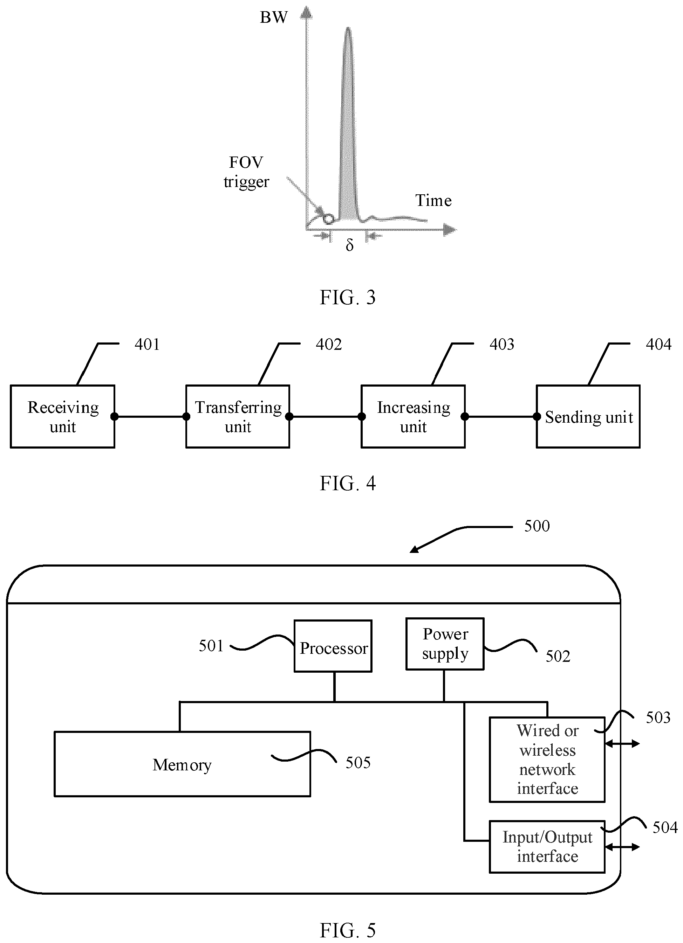

In some unexpected cases or when a scenario changes, for example, when an angle of view of a camera device rotates, the burst data is generated. As shown in FIG. 3, a size of the burst data may be several times that of regular data, and generally reaches two to three times that of the regular data. In this embodiment of this application, a data amount threshold may be set based on historical data or an empirical value. Data greater than the data amount threshold is the burst data, and data not greater than the data amount threshold is the regular data. It may be understood that the burst data is defined in another manner. For example, it is determined that data generated when the camera device rotates the angle of view or switches a picture is the burst data. A specific determining manner may be determined based on actual application, and this is not limited herein.

In this embodiment of this application, the burst data may be in a form of a data packet or a data frame. This is not specifically limited herein.

202. The first network device places the burst data in a high-priority queue.

The first network device may be set in a dual-queue scheduling mode, to be specific, the first network device includes the high-priority queue and a low-priority queue. In a process in which the first network device sends data to a second network device, sending of data in the high-priority queue is prior to sending of data in the low-priority queue.

The first network device places the burst data in the high-priority queue, and places the regular data in the low-priority queue without a special indication.

In this embodiment, only a dual-queue scheduling manner is used as an example for description. It may be understood that the first network device may control a data sending sequence in another manner. For example, the first network device adds a priority identifier to the received data, and the first network device sends the data to the second network device based on a priority indicated by the priority identifier. In this case, a priority of the burst data needs to be set to be higher than a priority of the regular data.

203. The first network device detects whether there is associated data in the low-priority queue, and if there is the associated data in the low-priority queue, performs step 204, or if there is no associated data in the low-priority queue, performs step 207.

In this embodiment, the associated data is regular data associated with the burst data. For example, if a burst occurs in a specific transmission control protocol (transmission control protocol, TCP) data flow, data that arrives at the first network device earlier should be sent before the burst data.

204. The first network device transfers the associated data to the high-priority queue.

To ensure a sending sequence of the associated data and the burst data, a priority of the associated data may be increased. For example, if the associated data is transferred to the high-priority queue, the first network device adds the associated data to the high-priority queue, and deletes the associated data in the low-priority queue. It may be understood that in a specific implementation process, there may be another manner. For example, the associated data in the low-priority queue is not deleted, and the associated data is used as backup data.

205. The first network device detects whether there is data that is about to time out in the low-priority queue, and if there is the data that is about to time out in the low-priority queue, performs step 206, or if there is no data that is about to time out in the low-priority queue, performs step 207.

To ensure that the data is forwarded to the second network device within preset duration after the data arrives in the first network device, if the data that is about to time out appears, the first network device preferentially sends the data that is about to time out. It may be understood that the data that is about to time out is data whose stay duration in the first network device exceeds a duration threshold, and the threshold may be set based on an actual situation.

206. The first network device transfers the data that is about to time out to the high-priority queue.

The first network device may transfer the data that is about to time out to the high-priority queue, so that the data that is about to time out is preferentially sent. For example, if the data that is about to time out is transferred to the high-priority queue, the first network device adds the associated data to the high-priority queue, and deletes the data that is about to time out in the low-priority queue. It may be understood that in a specific implementation process, there may be another manner. For example, the data that is about to time out in the low-priority queue is not deleted, and the data that is about to time out is used as backup data.

207. The first network device sends the data to the second network device.

The first network device sends the burst data and other regular data to the second network device. In the dual-queue scheduling mode, the first network device preferentially sends the data in the high-priority queue.

In this embodiment, steps 203 and 204 are processing of the associated data, and steps 205 and 206 are processing of the data that is about to time out. There is no time sequence relationship between the steps 203 and 204, and the steps 205 and 206.

The foregoing describes the data transmission method in embodiments of this application, and the following describes devices in embodiments of this application. Refer to FIG. 4 and an embodiment of a first network device in an embodiment of this application includes:
a receiving unit 401, configured to receive burst data, where the burst data is data whose data amount is greater than a data amount threshold;
a transferring unit 402, configured to, if a low-priority queue includes associated data, transfer the associated data from the low-priority queue to a high-priority queue, where the associated data is regular data associated with the burst data, and further configured to, if the low-priority queue includes data that is about to time out, transfer the data that is about to time out from the low-priority queue to the high-priority queue, where the data that is about to time out is data whose stay duration in the first network device exceeds a duration threshold;
an increasing unit 403, configured to, if regular data includes the data that is about to time out, increase a priority of the data that is about to time out, where the data that is about to time out is data whose stay duration in the first network device exceeds the duration threshold; and
a sending unit 404, configured to send the burst data and the regular data to a second network device in descending order of priorities, where a priority of the burst data is higher than a priority of the regular data, and the regular data is data whose data amount is not greater than the data amount threshold, further configured to, if the regular data includes the associated data, send the associated data to the second network device, where the associated data is the regular data associated with the burst data, and a priority of the associated data is greater than the priority of the burst data, and further configured to send data in the high-priority queue and data in the low-priority queue to the second network device, where the sending of the data in the high-priority queue is prior to the sending of the data in the low-priority queue, the burst data is placed in the high-priority queue, and the regular data is placed in the low-priority queue.

The following describes a network device in embodiments of this application. Refer to FIG. 5. An embodiment of the network device in embodiments of this application includes:

The network device 500 may include one or more processors 501 and a memory 505. The memory 505 stores one or more application programs or data.

The memory 505 may be volatile storage or persistent storage. The program stored in the memory 505 may include one or more modules, and each module may include a series of instruction operations for the network device 500. Further, the processor 501 may be configured to communicate with the memory 505, and perform, in the network device 500, the series of instruction operations in the memory 505.

The network device 500 may further include one or more power supplies 502, one or more wired or wireless network interfaces 503, one or more input/output interfaces 504, and/or one or more operating systems such as Windows ServerTM, Mac OS XTM, UnixTM, LinuxTM, and FreeBSDTM.

The processor 501 may perform the operations performed by the first network device in the embodiment shown in FIG. 2. Details are not described herein again.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. A part of or all of the units may be selected based on actual needs to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A data transmission method, comprising:
receiving, by a first network device, burst data, wherein the burst data is data whose data amount is greater than a data amount threshold; and
sending, by the first network device, the burst data and regular data to a second network device in descending order of priorities, wherein a priority of the burst data is higher than a priority of the regular data, and the regular data is data whose data amount is not greater than the data amount threshold;
wherein the first network device comprises a high-priority queue and a low-priority queue, the first network device sends data in the high-priority queue and data in the low-priority queue to the second network device, the sending of the data in the high-priority queue is prior to the sending of the data in the low-priority queue, the burst data is placed in the high-priority queue, and the regular data is placed in the low-priority queue.

2. The method according to claim 1, wherein after the receiving, by a first network device, burst data, the method further comprises:
if the regular data comprises associated data, sending, by the first network device, the associated data to the second network device, wherein the associated data is regular data associated with the burst data, and a priority of the associated data is greater than the priority of the burst data.

3. The method according to claim 1 or 2, wherein the method further comprises:
if the regular data comprises data that is about to time out, increasing, by the first network device, a priority of the data that is about to time out by adding the data to the high-priority queue and deleting it from the low-priority queue, wherein the data that is about to time out is data whose stay duration in the first network device exceeds a duration threshold.

4. The method according to any one of the preceding claims, wherein the method further comprises:
if the low-priority queue comprises the associated data, transferring, by the first network device, the associated data from the low-priority queue to the high-priority queue, wherein the associated data is the regular data associated with the burst data.

5. The method according to any one of the preceding claims, wherein the method further comprises:
if the low-priority queue comprises the data that is about to time out, transferring, by the first network device, the data that is about to time out from the low-priority queue to the high-priority queue, wherein the data that is about to time out is the data whose stay duration in the first network device exceeds the duration threshold.

6. A network device, used as a first network device, comprising:
a receiving unit, configured to receive burst data, wherein the burst data is data whose data amount is greater than a data amount threshold; and
a sending unit, configured to send the burst data and regular data to a second network device in descending order of priorities, wherein a priority of the burst data is higher than a priority of the regular data, and the regular data is data whose data amount is not greater than the data amount threshold;
wherein the network device comprises a high-priority queue and a low-priority queue; and
the sending unit is specifically configured to send data in the high-priority queue and data in the low-priority queue to the second network device, the sending of the data in the high-priority queue is prior to the sending of the data in the low-priority queue, the burst data is placed in the high-priority queue, and the regular data is placed in the low-priority queue.

7. The network device according to claim 6, wherein the sending unit is further configured to, if the regular data comprises associated data, send the associated data to the second network device, wherein the associated data is regular data associated with the burst data, and a priority of the associated data is greater than the priority of the burst data.

8. The network device according to claim 6 or 7, wherein the network device further comprises an increasing unit, configured to, if the regular data comprises data that is about to time out, increase a priority of the data that is about to time out by adding the data to the high-priority queue and deleting it from the low-priority queue, wherein the data that is about to time out is data whose stay duration in the first network device exceeds a duration threshold.

9. The network device according to any one of the preceding claims, wherein the network device further comprises a transferring unit, configured to, if the low-priority queue comprises the associated data, transfer the associated data from the low-priority queue to the high-priority queue, wherein the associated data is the regular data associated with the burst data.

10. The network device according to any one of the preceding claims, wherein the transferring unit is further configured to, if the low-priority queue comprises the data that is about to time out, transfer the data that is about to time out from the low-priority queue to the high-priority queue, wherein the data that is about to time out is the data whose stay duration in the first network device exceeds the duration threshold.

11. A computer storage medium, wherein the computer storage medium stores instructions; and when the instructions are executed on a network device, the network device is enabled to perform the method according to any one of claims 1 to 5.

12. A computer program product, wherein when the computer program product is executed on a network device, the network device is enabled to perform the method according to any one of claims 1 to 5.

## Patentansprüche

1. Datenübermittlungsverfahren, das umfasst:
Empfangen, durch eine erste Netzwerkvorrichtung, von Burst-Daten, wobei die Burst-Daten Daten sind, deren Datenmenge größer als ein Datenmengenschwellenwert ist; und Senden, durch die erste Netzwerkvorrichtung, der Burst-Daten und regulärer Daten an eine zweite Netzwerkvorrichtung in absteigender Ordnung von Prioritäten, wobei eine Priorität der Burst-Daten höher als eine Priorität der regulären Daten ist, und die regulären Daten Daten sind, deren Datenmenge nicht größer als der Datenmengenschwellenwert ist;
wobei die erste Netzwerkvorrichtung eine Warteschlange mit hoher Priorität und eine Warteschlange mit niedriger Priorität umfasst, die erste Netzwerkvorrichtung Daten in der Warteschlange mit hoher Priorität und Daten in der Warteschlange mit niedriger Priorität an die zweite Netzwerkvorrichtung sendet, das Senden der Daten in der Warteschlange mit hoher Priorität vor dem Senden der Daten in der Warteschlange mit niedriger Priorität erfolgt, die Burst-Daten in der Warteschlange mit hoher Priorität platziert werden und die regulären Daten in der Warteschlange mit niedriger Priorität platziert werden.

2. Verfahren nach Anspruch 1, wobei nach dem Empfangen, durch eine erste Netzwerkvorrichtung, von Burst-Daten, das Verfahren ferner umfasst:
falls die regulären Daten zugehörige Daten umfassen, Senden, durch die erste Netzwerkvorrichtung, der zugehörigen Daten an die zweite Netzwerkvorrichtung, wobei die zugehörigen Daten reguläre Daten sind, die den Burst-Daten zugehörig sind, und eine Priorität der zugehörigen Daten größer als die Priorität der Burst-Daten ist.

3. Verfahren nach Anspruch 1 oder 2, wobei das Verfahren ferner umfasst:
falls die regulären Daten Daten umfassen, die im Begriff sind, abzulaufen, Erhöhen, durch die erste Netzwerkvorrichtung, einer Priorität der Daten, die im Begriff sind, abzulaufen, durch Hinzufügen der Daten zu der Warteschlange mit hoher Priorität und deren Löschen aus der Warteschlange mit niedriger Priorität, wobei die Daten, die im Begriff sind, abzulaufen, Daten sind, deren Verweildauer in der ersten Netzwerkvorrichtung einen Dauerschwellenwert überschreitet.

4. Verfahren nach einem der vorstehenden Ansprüche, wobei das Verfahren ferner umfasst: falls die Warteschlange mit niedriger Priorität die zugehörigen Daten umfasst, Übertragen durch die erste Netzwerkvorrichtung, der zugehörigen Daten aus der Warteschlange mit niedriger Priorität in die Warteschlange mit hoher Priorität, wobei die zugehörigen Daten die reguläre Daten sind, die den Burst-Daten zugehörig sind.

5. Verfahren nach einem der vorstehenden Ansprüche, wobei das Verfahren ferner umfasst: falls die Warteschlange mit niedriger Priorität die Daten, die im Begriff sind, abzulaufen, umfasst, Übertragen, durch die erste Netzwerkvorrichtung, der Daten, die im Begriff sind, abzulaufen, aus der Warteschlange mit niedriger Priorität in die Warteschlange mit hoher Priorität, wobei die Daten, die im Begriff sind, abzulaufen, die Daten sind, deren Verweildauer in der ersten Netzwerkvorrichtung den Dauerschwellenwert überschreitet.

6. Netzwerkvorrichtung, die als eine erste Netzwerkvorrichtung verwendet wird, die umfasst: eine Empfangseinheit, die konfiguriert ist, um Burst-Daten zu empfangen, wobei die Burst-Daten Daten sind, deren Datenmenge größer als ein Datenmengenschwellenwert ist; und eine Sendeeinheit, die konfiguriert ist, um die Burst-Daten und die regulären Daten an eine zweite Netzwerkvorrichtung in absteigender Ordnung von Prioritäten zu senden,
wobei eine Priorität der Burst-Daten höher als eine Priorität der regulären Daten ist und die regulären Daten Daten sind, deren Datenmenge nicht größer als der Datenmengenschwellenwert ist;
wobei die Netzwerkvorrichtung eine Warteschlange mit hoher Priorität und eine Warteschlange mit niedriger Priorität umfasst; und
die Sendeeinheit speziell konfiguriert ist, um Daten in der Warteschlange mit hoher Priorität und Daten in der Warteschlange mit niedriger Priorität an die zweite Netzwerkvorrichtung zu senden, wobei das Senden der Daten in der Warteschlange mit hoher Priorität vor dem Senden der Daten in der Warteschlange mit niedriger Priorität erfolgt, die Burst-Daten in der Warteschlange mit hoher Priorität platziert werden und die regulären Daten in der Warteschlange mit niedriger Priorität platziert werden.

7. Netzwerkvorrichtung nach Anspruch 6, wobei die Sendeeinheit ferner konfiguriert ist, um, falls die regulären Daten zugehörige Daten umfassen, die zugehörigen Daten an die zweite Netzwerkvorrichtung zu senden, wobei die zugehörigen Daten reguläre Daten sind, die den Burst-Daten zugehörig sind, und eine Priorität der zugehörigen Daten größer als die Priorität der Burst-Daten ist.

8. Netzwerkvorrichtung nach Anspruch 6 oder 7, wobei die Netzwerkvorrichtung ferner eine Erhöhungseinheit umfasst, die konfiguriert ist, um, falls die regulären Daten Daten umfassen, die im Begriff sind, abzulaufen, eine Priorität der Daten, die im Begriff sind, abzulaufen, durch Hinzufügen der Daten zu der Warteschlange mit hoher Priorität und deren Löschen aus der Warteschlange mit niedriger Priorität, zu erhöhen,
wobei die Daten, die im Begriff sind, abzulaufen, Daten sind, deren Verweildauer in der ersten Netzwerkvorrichtung einen Dauerschwellenwert überschreitet.

9. Netzwerkvorrichtung nach einem der vorstehenden Ansprüche, wobei die Netzwerkvorrichtung ferner eine Übertragungseinheit umfasst, die konfiguriert ist, um, falls die Warteschlange mit niedriger Priorität die zugehörigen Daten umfasst, die zugehörigen Daten aus der Warteschlange mit niedriger Priorität in die Warteschlange mit hoher Priorität zu übertragen, wobei die zugehörigen Daten die regulären Daten sind, die den Burst-Daten zugehörig sind.

10. Netzwerkvorrichtung nach einem der vorstehenden Ansprüche, wobei die Übertragungseinheit ferner konfiguriert ist um, falls die Warteschlange mit niedriger Priorität die Daten, die im Begriff sind, abzulaufen, umfasst, die Daten, die im Begriff sind, abzulaufen, aus der Warteschlange mit niedriger Priorität in die Warteschlange mit hoher Priorität zu übertragen, wobei die Daten, die im Begriff sind, abzulaufen, die Daten sind, deren Verweildauer in der ersten Netzwerkvorrichtung den Dauerschwellenwert überschreitet.

11. Computerspeichermedium, wobei das Computerspeichermedium Anweisungen speichert; und wenn die Anweisungen auf einer Netzwerkvorrichtung ausgeführt werden, die Netzwerkvorrichtung aktiviert wird, um das Verfahren nach einem der Ansprüche 1 bis 5 durchzuführen.

12. Computerprogrammprodukt, wobei, wenn das Computerprogrammprodukt auf einer Netzwerkvorrichtung ausgeführt wird, die Netzwerkvorrichtung aktiviert wird, um das Verfahren nach einem der Ansprüche 1 bis 5 durchzuführen.

## Revendications

1. Procédé de transmission de données, comprenant :
la réception, par un premier dispositif de réseau, de données en rafales, dans lequel les données en rafales sont des données dont la quantité de données est supérieure à un seuil de quantité de données ; et
l'envoi, par le premier dispositif de réseau, des données en rafales et de données régulières à un second dispositif de réseau dans un ordre décroissant de priorités, dans lequel une priorité des données en rafales est supérieure à une priorité des données régulières, et les données régulières sont des données dont la quantité de données n'est pas supérieure au seuil de quantité de données ;
dans lequel le premier dispositif de réseau comprend une file d'attente haute priorité et une file d'attente faible priorité, le premier dispositif de réseau envoie des données dans la file d'attente haute priorité et des données dans la file d'attente faible priorité au second dispositif de réseau, l'envoi des données dans la file d'attente haute priorité est antérieur à l'envoi des données dans la file d'attente faible priorité, les données en rafales sont placées dans la file d'attente haute priorité, et les données régulières sont placées dans la file d'attente faible priorité.

2. Procédé selon la revendication 1, dans lequel, après la réception, par un premier dispositif de réseau, de données en rafales, le procédé comprend en outre :
si les données régulières comprennent des données associées, l'envoi, par le premier dispositif de réseau, des données associées au second dispositif de réseau, dans lequel les données associées sont des données régulières associées aux données en rafales, et une priorité des données associées est supérieure à la priorité des données en rafales.

3. Procédé selon la revendication 1 ou 2, dans lequel le procédé comprend en outre : si les données régulières comprennent des données qui sont sur le point d'expirer, l'augmentation, par le premier dispositif de réseau, d'une priorité des données qui sont sur le point d'expirer en ajoutant les données à la file d'attente haute priorité et en les supprimant de la file d'attente faible priorité, dans lequel les données qui sont sur le point d'expirer sont des données dont la durée de séjour dans le premier dispositif de réseau dépasse un seuil de durée.

4. Procédé selon l'une quelconque des revendications précédentes, dans lequel le procédé comprend en outre :
si la file d'attente faible priorité comprend les données associées, le transfert, par le premier dispositif de réseau, des données associées de la file d'attente faible priorité à la file d'attente haute priorité, dans lequel les données associées sont les données régulières associées aux données en rafales.

5. Procédé selon l'une quelconque des revendications précédentes, dans lequel le procédé comprend en outre :
si la file d'attente faible priorité comprend les données qui sont sur le point d'expirer, le transfert, par le premier dispositif de réseau, des données qui sont sur le point d'expirer de la file d'attente faible priorité à la file d'attente haute priorité, dans lequel les données qui sont sur le point d'expirer sont les données dont la durée de séjour dans le premier dispositif de réseau dépasse le seuil de durée.

6. Dispositif de réseau, utilisé en tant que premier dispositif de réseau, comprenant :
une unité de réception, configurée pour recevoir des données en rafales, dans lequel les données en rafales sont des données dont la quantité de données est supérieure à un seuil de quantité de données ; et
une unité d'envoi, configurée pour envoyer les données en rafales et les données régulières à un second dispositif de réseau dans un ordre décroissant de priorités,
dans lequel une priorité des données en rafales est supérieure à une priorité des données régulières, et les données régulières sont des données dont la quantité de données n'est pas supérieure au seuil de quantité de données ;
dans lequel le dispositif de réseau comprend une file d'attente haute priorité et une file d'attente faible priorité ; et
l'unité d'envoi est spécifiquement configurée pour envoyer des données dans la file d'attente haute priorité et des données dans la file d'attente faible priorité au second dispositif de réseau, l'envoi des données dans la file d'attente haute priorité est antérieur à l'envoi des données dans la file d'attente faible priorité, les données en rafales sont placées dans la file d'attente haute priorité, et les données régulières sont placées dans la file d'attente faible priorité.

7. Dispositif de réseau selon la revendication 6, dans lequel l'unité d'envoi est en outre configurée pour, si les données régulières comprennent des données associées, envoyer les données associées au second dispositif de réseau, dans lequel les données associées sont des données régulières associées aux données en rafales, et une priorité des données associées est supérieure à la priorité des données en rafales.

8. Dispositif de réseau selon la revendication 6 ou 7. dans lequel le dispositif de réseau comprend en outre une unité d'augmentation, configurée pour, si les données régulières comprennent des données qui sont sur le point d'expirer, augmenter une priorité des données qui sont sur le point d'expirer en ajoutant les données à la file d'attente haute priorité et en les supprimant de la file d'attente faible priorité,
dans lequel les données qui sont sur le point d'expirer sont des données dont la durée de séjour dans le premier dispositif de réseau dépasse un seuil de durée.

9. Dispositif de réseau selon l'une quelconque des revendications précédentes, dans lequel le dispositif de réseau comprend en outre une unité de transfert, configurée pour, si la file d'attente faible priorité comprend les données associées, transférer les données associées de la file d'attente faible priorité à la file d'attente haute priorité, dans lequel les données associées sont les données régulières associées aux données en rafales.

10. Dispositif de réseau selon l'une quelconque des revendications précédentes, dans lequel l'unité de transfert est en outre configurée pour, si la file d'attente faible priorité comprend les données qui sont sur le point d'expirer, transférer les données qui sont sur le point d'expirer de la file d'attente faible priorité à la file d'attente haute priorité, dans lequel les données qui sont sur le point d'expirer sont les données dont la durée de séjour dans le premier dispositif de réseau dépasse le seuil de durée.

11. Support de stockage informatique, dans lequel le support de stockage informatique stocke des instructions ; et lorsque les instructions sont exécutées sur un dispositif de réseau, le dispositif de réseau est activé pour réaliser le procédé selon l'une quelconque des revendications 1 à 5.

12. Produit-programme d'ordinateur, dans lequel, lorsque le produit-programme d'ordinateur s'exécute sur un dispositif de réseau, le dispositif de réseau est activé pour réaliser le procédé selon l'une quelconque des revendications 1 à 5.
